# EUROPEAN PATENT SPECIFICATION

(11) **EP 1 790 557 B1**
(45) Date of publication and mention of the grant of the patent: **13.01.2010**
(21) Application number: 06024539.6
(22) Date of filing: 27.11.2006
(51) Int. Cl.: B62J 11/00, B62J 9/00, B62J 15/00, B62J 99/00

(54) **Motorcycle with a battery case in the rear fender**
Motorrad mit einem Batteriegehäuse in dem hinteren Kotflügel
Motocyclette avec un boîtier de batterie dans le garde-boue arrière

(30) Priority: 25.11.2005 CN 200510127216
(43) Date of publication of application: 30.05.2007
(73) Proprietor: Yamaha Hatsudoki Kabushiki Kaisha, Iwata-shi, Shizuoka-ken 438-8501 (JP)
(72) Inventor: Ming-Shun, Yao, Chunli (TW); Hsing-Yang, Wang, Chunli (TW); Zheng-Zhi, Peng, Chunli (TW)
(74) Representative: Grünecker, Kinkeldey, Stockmair & Schwanhäusser Anwaltssozietät

(56) References cited:
- EP-A2- 1 122 159
- EP-A2- 1 422 133
- DE-U1-202004 015 640
- ES-A1- 2 149 065
- FR-A1- 2 709 455
- GB-A- 1 308 388
- JP-A- 4 283 186
- JP-A- 6 107 260
- JP-A- 2002 249 089

## Description

The present invention relates to a motorcycle having a battery accommodating structure.

Usually, batteries are disposed in various vehicles to provide electrical power to start vehicles and to light them up. In order to accommodate and retain the battery, a battery case in accordance with the size of the battery must be formed in a vehicle. The battery accommodating structure is of great importance to a motorcycle since the motorcycle has an extremely limited space compared with a car. The design of the battery accommodating structure must avoid causing an over large size of the motorcycle body, and also avoid obstructing the arrangement of internal parts and wires of the motorcycle.

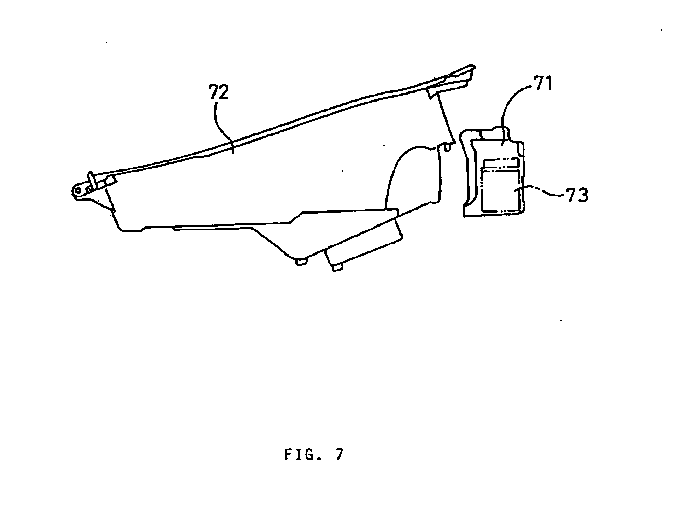

Accordingly, in earlier motorcycles, the battery accommodating structure is arranged in the space under the footboard to satisfy the above requirements. However, as the battery accommodating structure arranged under the footboard can be opened easily, it is possible for the battery to be stolen. In order to solve this problem, the battery accommodating structure is also designed to be arranged in the storage case under the motorcycle seat. FIG. 7 shows the prior battery accommodating structure of the motorcycle, in which a battery case 71 is disposed in the lower rear portion of a storage case 72. The battery case 71 is formed with molds different from those used to form the storage case 72. And the battery case 71 is different from the storage case 72, and is locked in the lower rear portion of the storage case 72 with a structure such as bolt structure. This battery accommodating structure meets the requirements of not causing the motorcycle to become too large and not obstructing the arrangement of internal parts and wires. Moreover, as the structure is disposed inside the storage case 72, the structure can be protected by the locked seat portion, such that the battery 73 in the structure cannot be easily stolen away or damaged.

However, though the battery case 71 is disposed inside the motor and cannot be easily stolen away or damaged, the following problems still exist in the battery accommodating structure as shown in FIG. 7. Firstly, as the structure is disposed in the interior of the lower recess portion of the storage case 72, an operator must get into the motor through the storage case 72, and then tilt the battery 73 with hands to install or remove the battery 73, which is extremely inconvenient and causing difficulties in assembling and maintenance. Furthermore, when tilting and removing the battery 73, the hands of the operator are obstructed by the edges of the opening of the battery case 71 in the storage case 72, and thus the operation becomes more difficult.

In addition, as the battery case 71 and the storage case 72 are two separate cases, one more mold is required when fabricating them, which results in an increase of manufacturing and management costs. And when being fixed, the battery case 71 may be separated from the storage case 72 due to human errors or manual operation when fabricating. Thus, when driving the motorcycle in the rain, water and mud may splash into the structure through the slit.

Furthermore, as the battery case 71 is installed in the storage case 72 with the bolt structure or other structures according to the prior battery accommodating structure, if the fixing is improper, the bolts may get loose after long term usage due to the vibration of the motor, which further causes problems such as noises.

ES 2149065 A1 according to the preamble of claim 1 discloses a motor scooter comprising a rear housing member including a lower recess and an upper recess. The upper recess includes a case for accommodating a battery. A cover is provided for opening and closing the case formed under the rear housing member at a position corresponding to the case.

EP 11 22 159 A2 discloses a motor scooter comprising a rear frame cover having a rear receiving chamber for accommodating a battery and a controller. A maintenance lid closes the rear receiving chamber. A driver seat is provided which can be freely opened and closed.

DE 20 2004 015640 U1 discloses a motor scooter comprising a rear housing member including a battery case in which a battery is disposed. A cover formed at the rear housing member covers the battery case.

JP 04-283186 A discloses a motorcycle comprising an inner rear fender and an outer rear fender, wherein a battery is supported by a horizontal portion and a vertical portion of the outer rear fender.

GB 1308388 A discloses a three-wheeled cart comprising a truncated housing forming a battery accommodating space in which batteries are accommodated. At the top portion of the truncated housing, a cover plate covers the battery accommodating space.

JP 2002-249089 A discloses a motorcycle comprising a bifurcated rear frame having a space for accommodating a battery box. The battery box includes a box body and a pivotable lid for opening and closing the box body. The battery box houses a battery.

JP 06-107260 A discloses a motor scooter comprising a car body frame, the outer side surface thereof is covered by a frame lower cover and a frame upper cover. The frame lower cover is bent inward and fixed to the frame, wherein a battery attaching section is formed at the bent part for accommodating a battery. The battery attachment section is covered by means of the frame upper cover.

EP 1422133 A2 discloses a motor scooter comprising a container box including a battery housing for accommodating a battery.

Regarding the aforementioned problems of conventional battery accommodating structures of the motorcycle, those in this field having been attempting to find an effective solution and also users are expecting a solution. Therefore, the inventors of the present invention, after years of study and development directed to the aforementioned problems of conventional battery accommodating structures of the motorcycle, propose a novel solution.

It is the object of the present invention is to provide a motorcycle having a battery accommodating structure useful for accommodating and supporting batteries with various external dimensions without needing of other fixing components.

This objective is solved by the features of claim 1.

In accordance with the present invention there is provided a motorcycle as set out in claim 1. Preferred embodiments of the present invention are laid down in the dependent claims.

Preferably, the battery case is disposed in an inner space at a back side of a top portion of the rear housing member.

Further, preferably the battery case is disposed in the space between the inner side of the rear housing member at the rear of the motorcycle and other components of the motorcycle and is combined with the rear housing member.

According to another preferred embodiment, the motorcycle further comprises a rear handle, and the battery case cover is formed on the rear housing member in the portion not overlapping with the rear handle in plan view.

Preferably, the battery case is integrated with the rear housing member into one piece.

According to yet another preferred embodiment, the motorcycle further comprises a seat portion over the rear housing member, and at least a part of the battery case is covered by the seat portion in plan view.

Preferably, auxiliary fixing components are formed in the battery case to fix the battery.

In the following, the present invention is explained in greater detail with respect to several embodiments thereof in conjunction with the accompanying drawings, wherein:
- FIG. 1: is a side view of the motorcycle having the battery accommodating structure of the motorcycle according to an embodiment,
- FIG. 2: is the side view of the battery accommodating structure of the motorcycle of the present embodiment, wherein (a) is the view of the structure with the rear handle being disassembled, and (b) is the view of structure with the rear handle being assembled,
- FIG. 3: is the top view of the battery accommodating structure of the motorcycle of the present embodiment,
- FIG. 4: is position relationship diagram of the seat portion and the battery case in the battery accommodating structure of the motorcycle of the present embodiment,
- FIGs. 5(a) and 5(b): are structural views of the battery case of the present embodiment, wherein (a) is the side view, and (b) is the front view,
- FIG. 6: is the schematic view of the battery case of the present embodiment for accommodating batteries with various specifications, and
- FIG. 7: is the diagram of prior battery accommodating structure of the motorcycle.

### List of Reference Numerals:

1 Battery case
2 Battery case cover
3 Battery
3' Battery
4 Auxiliary fixing components
11 Rear housing
12 Top
13 Bottom
14 Recess portion
50 Motorcycle
51 Head
52 Motorcycle frame
53 Footboard
54 Seat portion
55 Tire
56 Front fork
57 Power and transmission mechanism
58 Rear handle

Embodiments will be illustrated in detail with reference to the accompanying drawings.

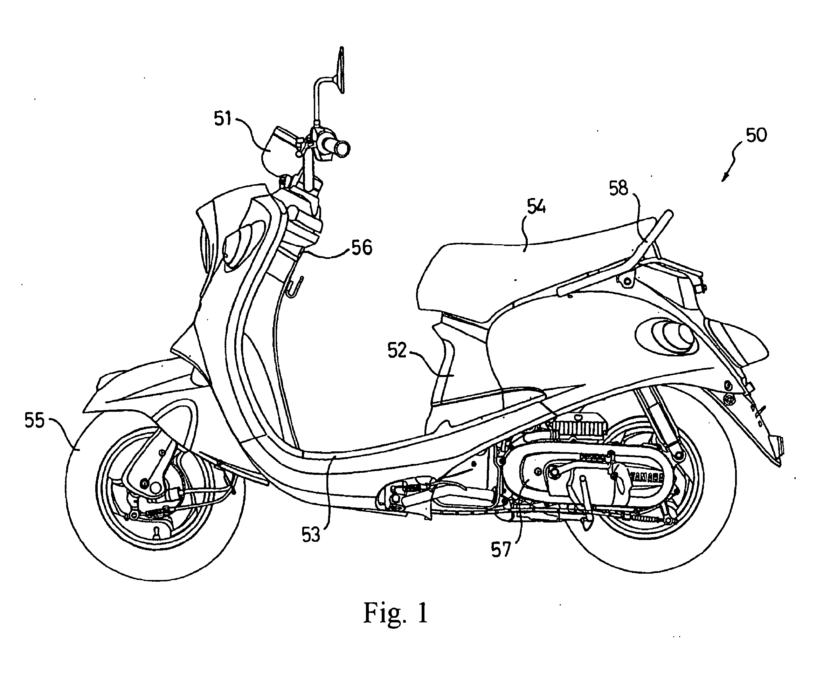

FIG. 1 is a side view of the motorcycle having the battery accommodating structure of the motorcycle of the present embodiment. Though the battery accommodating structure of the present embodiment is applied to a scooter as shown in FIG. 1, but it is not intended to limit the present teaching, and the structure can also be applied in other types of motorcycles such as large motorcycles and power vehicles, wherein power vehicles are, for example, all-terrain vehicles (ATV) and snow vehicles, etc.

As shown in FIG. 1, the motorcycle 50 having the battery accommodating structure 1 of the present embodiment comprises a head 51, a motor frame 52, a footboard 53, a seat portion 54, tires 55, a front fork 56, a power and transmission mechanism 57, and a rear handle 58.

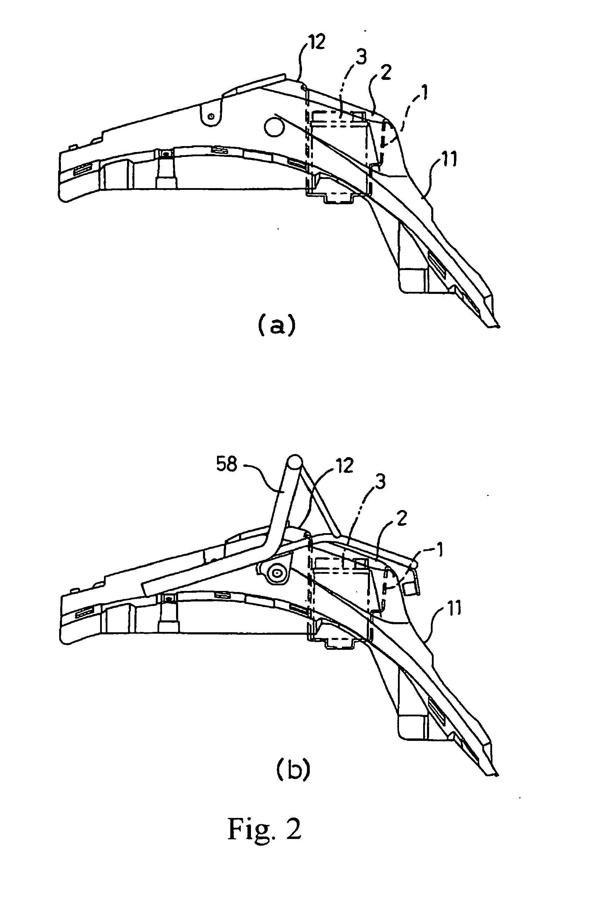

FIG. 2 is the side view of the battery accommodating structure of the motorcycle of the present embodiment, wherein (a) is the view of the structure with the rear handle disassembled, and (b) is the view of structure with the rear handle assembled. As shown in FIG. 2, in the battery accommodating structure of the motorcycle of the present embodiment, the battery case 1 of the motorcycle 50 is formed by using the space between the inner side of the rear housing 11 at the rear side of the motorcycle 50 (the lower side of the rear housing 11 in FIG. 2) and other components of the motorcycle 50 according to the shape of the battery 3.

The rear housing 11 is provided at a rear side of the motorcycle 50 comprising a rear part of the vehicle body or cowling components and, in particular, comprises a rear fender for the rear wheel. Accordingly, the rear housing 11 according to the embodiment is provided with attachment means to attach the rear lights and/or reflecting elements as well as right and left rear side cowlings partially covering the rear wheel, to which further lights might be attachable.

In addition, a front section of the rear housing 11 of the embodiment has an attachment structure for attaching at least a rear part of the seat 54 and/or for attaching a rear handle 58. In as such the rear housing 11 represents part of the body frame of the motorcycle.

Moreover, the rear housing 11 according to the embodiment is a formed sheet metal to which the battery case 1 is attachable. Therein, the rear housing 11 might be provided with a closed compartment in which the battery case is accommodatable. Likewise, the rear housing 11 might be provided as a bent sheet metal with a downwardly open cross section.

In this embodiment, from side view, the rear housing 11 has substantially a shape rising from the front (the left in FIG. 2) toward the rear until the top portion 12 and then gradually falling. The battery case 1 is disposed at the back of the top portion 12 of the rear housing 11 (indicated by dotted lines in FIG. 2), and the battery case 1 is combined with and disposed on the rear housing 11. As the inner space at the back of the top portion 12 is not used, the battery case 1 is disposed in the inner space, which can effectively utilize the unused space inside the rear housing and can make full use of the space used to accommodate the battery case in the prior art. Thus, the arrangement of the internal parts of the motorcycle becomes more compact, which avoids causing the motorcycle 50 to become over large and avoids obstructing the arrangement of other internal parts and wires inside the motorcycle 50.

Then, a battery case cover 2 for opening and closing the battery case 1 is formed on the rear housing in the portion corresponding to the battery case 1. Thus, the operator can access the battery 3 after opening the battery case cover 2 on the rear housing 11, such that the operator does not need to get into the interior of the motorcycle as in the prior art. Assembling and maintenance becomes easier, and the hands of the operator will not be obstructed by the edges of the openings of the storage case and the battery case.

However, when a rear handle is installed as shown in FIG. 2(b), as a rear handle 58 is installed on the upper side of the rear housing 11, in order to avoid the situation in which the battery case cover 2 cannot be fully opened due to being blocked by the rear handle 58, the portion of the rear housing 11 that functions as the battery case cover 2 of the battery case 1 is preferably at a position where the battery case cover 2 is not blocked by the rear handle 58 and can be opened.

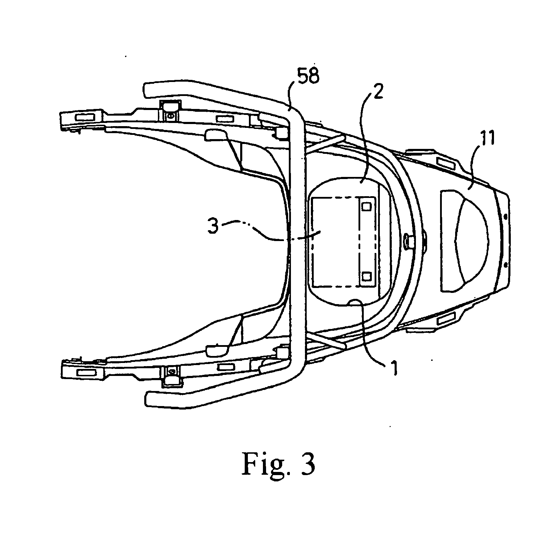

FIG. 3 is the top view of the battery case structure of the motorcycle of the present invention, the relationship between the positions of the battery case cover 2 and the rear handle 58 is clearly shown in FIG. 3. As shown in FIG. 3, in this embodiment, in order to avoid the situation in which the battery case cover 2 of the battery case 1 is blocked by the rear handle 58 and cannot be opened, the portion of the rear housing 11 that functions as the battery case cover 2 of the battery case 1 is determined to be the portion not being overlapped with the rear handle 58 of the motorcycle 50 from top view. Thus, the opening and closing of the battery case cover 2 in the battery accommodating structure of the present embodiment will not be affected even if the rear handle 58 is disposed on the motorcycle 50. The operator can put the hands through the rear handle 58 to open the battery case cover 2 to remove or install the battery 3.

Moreover, the battery case 1 can be fabricated separately from the rear housing 11 and then combined with and disposed on the housing 11 with fasteners or bolts and so on, and the battery case 1 can also be directly integrated with the rear housing 11 into one piece. Thus, no additional molds are required when fabricating, which not only reduces the manufacturing cost and fixing operation cost, but also prevents mud and water from splashing into the battery case since no slit exists between the battery case and the storage case. Therefore, the battery in the case cannot be damaged.

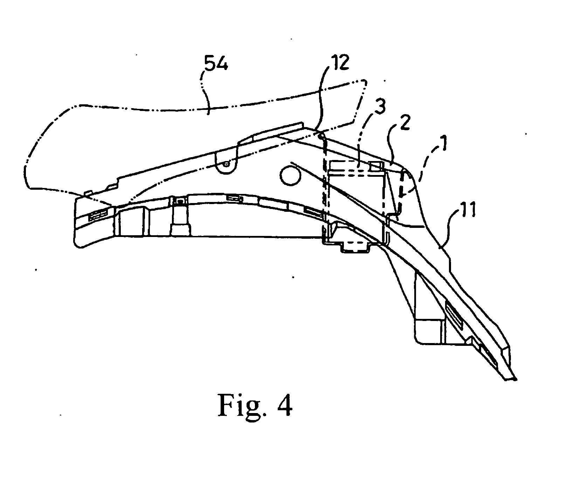

FIG. 4 is the position relationship diagram of the seat portion and the battery case in the battery accommodating structure of the motorcycle of the present embodiment. As shown in FIG. 4, in the battery accommodating structure of the motorcycle of the present embodiment, the battery case is preferably formed at the position where at least a part of the case is covered by the seat portion 54 of the motorcycle 50 from top view.

Thus, the seat portion 54 over the rear housing 11 covers at least a part of the battery case 1 right on the top, thus shielding and protecting the locking and fixing device for locking and fixing the battery case cover 2, and protecting the battery case cover 2 and the battery 3 from being damaged or stolen. Even if the battery case cover 2 is improperly opened, the locked seat portion 54 can shelter a partial area above the battery case 1. Thus, the battery case cover 2 can only be opened at a limited angle, and the battery 3 will not be stolen away or damaged. Another aspect of this feature is that when installing and removing the battery 3, the operator can open the battery case cover 2 to access the battery 3 after opening the seat portion 54.

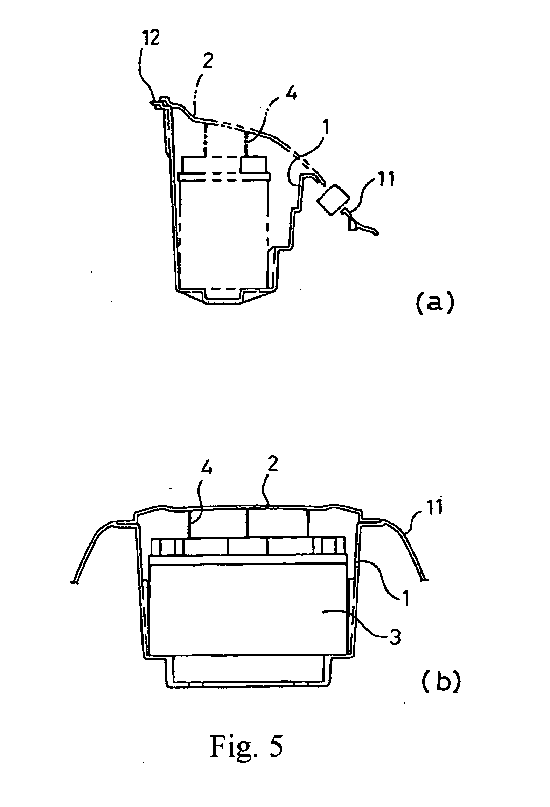

FIG. 5 is the structural view of the battery case 1 of the present embodiment, wherein (a) is a side view, and (b) is the front view. As a slit exists between the battery case 1 and the battery 3 accommodated in the battery case 1, the auxiliary fixing components 4 are preferably disposed inside the battery case 1 in the present embodiment, such that the battery 3 is fixed and will not shake with the vibration of the motor body. In the present embodiment, for example, a plurality of ribs is formed on the inner side of the battery case cover 2 of the battery case 1 to function as the auxiliary fixing components 4. As shown in FIGs. 5, when the battery case cover 2 is closed, the plurality of ribs formed on the inner side can support the top surface of the battery 3, thus helping to fix the battery 3 accommodated in the case, such that the battery 3 will not collide with other components or gradually get loose due to the vibration of the motorcycle. Furthermore, the plurality of auxiliary fixing components are not limited to being formed in the battery case cover 2, and can also be formed at appropriate positions on the inner side of the battery case 1, so as to help to fix the battery 3 accommodated in the case.

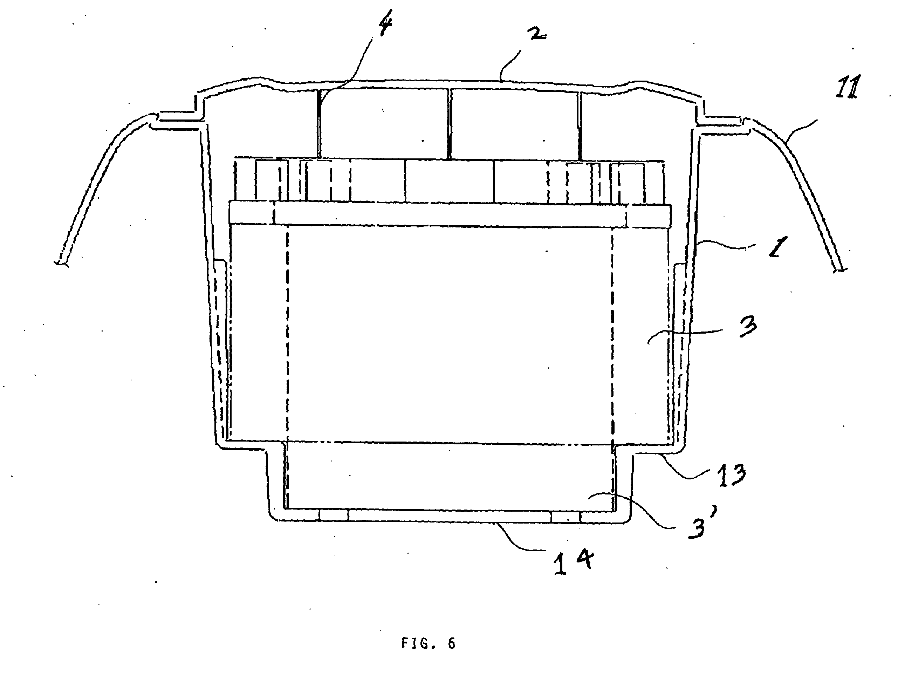

Fig. 6 is the schematic view of the battery case 1 of the present embodiment for accommodating batteries with various specifications. As shown in FIG. 6, the bottom portion 13 of the battery case 1 of this embodiment is used to fit a battery 3' with another specification, and thus a part of the interior protrudes outwards (downwards as shown in the figure) for a distance, and a recess portion 14 is formed. Therefore, when the battery 3 with a specification, which is wide and short, is required to be carried, the bottom portion 13 of the battery case 1 can support the battery 3; and when the battery 3' with another specification, which is long and narrow, is carried, the recess portion 14 of the bottom portion 13 of the battery case 1 can accommodate and support the battery 3'. Therefore, the present embodiment achieves the effect that batteries with various specifications can be accommodated as desired, and overcomes problems that batteries with other specifications cannot be used or other fixing components are needed. Furthermore, the bottom 13 of the battery case 1 of the present embodiment is not limited to the shape described above, and can be formed to a shape such that a part of the interior of the recess portion 14 protrudes outwards for a distance, so as to form a recess portion to accommodate and support batteries with other specifications. Moreover, the recess portion 14 is not limited to being quadrangular as shown in FIG. 6, and can also be formed to be oval or other shapes as desired.

The technical content and features of the present embodiment are disclosed above. Those of ordinary skill in the art can make modifications and variations according to the teaching and disclosure of the present embodiment, to include all modifications and variations not departing from the present teaching.

The description above discloses (amongst others), an embodiment of a battery accommodating structure of the motorcycle comprises a battery case for accommodating a battery. The battery accommodating structure is characterized in that the battery case is disposed in the space between the inner side of the rear housing at the rear of the motorcycle and other components of the motorcycle, and is combined with and disposed on the rear housing. And a battery case cover for opening and closing the battery case is formed on the rear housing at the position corresponding to the battery case.

According to the aforementioned construction of the present embodiment, a battery case is formed by using the space between the inner side of the rear housing at the rear side of the motorcycle and other components of the motorcycle, and the battery case is combined with and disposed on the rear housing. The battery case cover is formed on the rear housing at the position corresponding to the battery case. Thus, the unutilized internal space of the rear housing can be used, and also the space for arranging the battery case according to the prior art can also be utilized, thus attaining a compact arrangement of components inside the motorcycle and satisfying the basic requirements of not causing the motorcycle to become overlarge and not obstructing the arrangement of internal parts and wires. Moreover, when installing and removing the battery, the operator can handle the battery after opening the battery case cover on the rear housing without getting into the interior of the motorcycle, so assembling and maintenance are easier, and the hands of the operator will not be obstructed by the openings of the storage case and the battery case.

According to a further preferred embodiment, the motorcycle further comprises a rear handle, and the battery case cover is formed on the rear housing in the portion not overlapping with the rear handle from top view.

According to the aforementioned construction, by forming the battery case cover on the rear housing in the portion not overlapping with the rear handle from top view, the opening of the battery case cover of the present embodiment will not be restricted even if a rear handle is arranged on the motorcycle. When installing and removing the battery, by reaching through the rear handle, the operator can open the battery case cover to install or remove the battery, thereby achieving the above described effect.

According to a further preferred embodiment, the battery case and the rear housing are integrated into one piece.

According to the aforementioned construction, as the battery case and the rear housing are integrated into one piece, additional molds are not required when fabricating, and the manufacturing cost and fixed operation cost can be reduced. Moreover, no slit exists between the battery case and the storage case, so the mud and water will not splash into the battery case, which protects the battery in the case from being damaged.

According to a further preferred embodiment, the motorcycle further comprises a seat portion over the rear housing, and at least a portion of the battery case is covered by the seat portion from top view.

According to the aforementioned construction, as the seat portion over the rear housing covers at least a portion of the battery case right on the top, the battery case is protected by the locked seat portion, such that the battery cannot be easily stolen away or damaged. When installing and removing the battery, the operator can open the battery case cover on the rear housing to handle the battery after opening the seat portion.

According to a further preferred embodiment, the auxiliary fixing components are formed in the battery case to fix the battery.

According to the aforementioned construction, as the auxiliary fixing components are formed in the battery case to fix the battery, the battery accommodated in the case is supported and fixed by the auxiliary fixing components, and thus noises caused by the shaking and vibrating of the motorcycle while driving can be avoided.

According to a further preferred embodiment, there is disclosed a motorcycle having the battery accommodating structure according to any one of the afore-described embodiments.

According to the aforementioned construction, the motorcycle having the battery accommodating structure of the motorcycle according to any one of the above embodiments can be obtained.

Further, according to a first preferred aspect, the description discloses a battery accommodating structure of a motorcycle, comprising a battery case for accommodating a battery, wherein the battery case is disposed in the space between the inner side of a rear housing at the rear of the motorcycle and other components of the motorcycle and is combined with the rear housing, and a battery case cover for opening and closing the battery case is formed on the rear housing at the position corresponding to the battery case.

Further, according to a second preferred aspect, the motorcycle further comprises a rear handle, and the battery case cover is formed on the rear housing in the portion not overlapping with the rear handle from top view.

Further, according to a third preferred aspect, the battery case is integrated with the rear housing into one piece.

Further, according to a fourth preferred aspect, the motorcycle further comprises a seat portion over the rear housing, and at least a part of the battery case is covered by the seat portion from top view.

Further, according to a fifth preferred aspect, auxiliary fixing components are formed in the battery case to fix the battery.

Further, according to a sixth preferred aspect, there is disclosed a motorcycle comprising the battery accommodating structure according to any one of the above first to fifth preferred aspects.

The above description particularly discloses a battery accommodating structure of a motorcycle, in which a battery accommodating space is formed by making full use of the structure of the motorcycle and the space formed after molding, so as to accommodate the battery and facilitate treating the battery, said battery accommodating structure of the motorcycle including a battery case, wherein the battery case is formed in the space between the inner side of the rear housing at the rear of the motorcycle and other components of the motor and is combined with the rear housing, and a battery case cover is formed on the rear housing at the position corresponding to the battery case.

## Claims

1. Motorcycle (50) comprising a battery accommodating structure, in which a battery case (1) for accommodating a battery (3) is disposed in an inner space of a rear housing member (11) at the rear side of the motorcycle, and wherein a battery case cover (2) for opening and closing the battery case (1) is formed on the rear housing member (11) at a position corresponding to the battery case (1),
**characterized in that**
a recess portion(14) is formed in the bottom portion (13) of the battery case (1) so that the bottom portion (13) of the battery case (1) is adapted to support a first kind of batteries (3) having a predetermined bottom section and a predetermined height and the recess portion (14) of the bottom portion (13) is adapted to accommodate and support a second kind of batteries (3') having a reduced bottom section and an increased height.

2. Motorcycle according to claim 1, **characterized in that** the battery case (1) is disposed in an inner space at a back side of a top portion (12) of the rear housing member (11).

3. Motorcycle according to claim 1 or 2, **characterized in that** the battery case (1) is disposed in the space between the inner side of the rear housing member (11) at the rear of the motorcycle and other components of the motorcycle and is combined with the rear housing member (11).

4. Motorcycle according to one of the claims 1 to 3, **characterized in that** the motorcycle further comprises a rear handle (58), and the battery case cover (2) is formed on the rear housing member (11) in the portion not overlapping with the rear handle (58) in plan view.

5. Motorcycle according to one of the claims 1 to 4, **characterized in that** the battery case (1) is integrated with the rear housing member (11) into one piece.

6. Motorcycle according to one of the claims 1 to 5, **characterized in that** the motorcycle further comprises a seat portion (54) over the rear housing member (11), and at least a part of the battery case (1) is covered by the seat portion (54) in plan view.

7. Motorcycle according to one of the claims 1 to 6, **characterized in that** auxiliary fixing components (4) are formed in the battery case (1) to fix the battery (3; 3').

8. Motorcycle according to one of claims 1 to 7, **characterized in that** the motorcycle is a motor scooter.

## Patentansprüche

1. Motorrad (50), aufweisend eine Batterieaufnahmekonstruktion, in der ein Batteriekasten (1) zum Aufnehmen einer Batterie (3) in einem Innenraum eines hinteren Gehäuseteils (11) auf der Rückseite des Motorrades angeordnet ist, und wobei ein Batteriekastendeckel (2) zum Öffnen oder Schließen des Batteriekastens (1) an dem hinteren Gehäuseteil (11) an einer Position gebildet ist, die dem Batteriekasten (1) entspricht.
**dadurch gekennzeichnet, dass**
ein Aussparungsabschnitt (14) in dem Bodenabschnitt (13) des Batteriekastens (1) gebildet ist, so dass der Bodenabschnitt (13) des Batteriekastens (1) vorgesehen ist, eine erste Art von Batterien (3) mit einem vorbestimmten Bodenquerschnitt und einer vorbestimmten Höhe zu lagern und wobei der Aussparungsabschnitt (14) vorgesehen ist, eine zweite Art von Batterien (3') mit einem reduzierten Bodenquerschnitt und einer erhöhten Höhe aufzunehmen.

2. Motorrad nach Anspruch 1, **dadurch gekennzeichnet, dass** der Batteriekasten (1) in einem Innenraum auf einer Rückseite eines oberseitigen Abschnittes (12) des hinteren Gehäuseteils (11) angeordnet ist.

3. Motorrad nach Anspruch 1 oder 2, **dadurch gekennzeichnet, dass** der Batteriekasten (1) in Raum zwischen der Innenseite des hinteren Gehäuseteils (11) auf der Rückseite des Motorrades und weiteren Bauteilen des Motorrades angeordnet ist und mit dem hinteren Gehäuseteil (11) kombiniert ist.

4. Motorrad nach einem der Ansprüche 1 bis 3, **dadurch gekennzeichnet, dass** das Motorrad außerdem einen hinteren Handgriff (58) aufweist und der Batteriekastendeckel (2) an dem hinteren Gehäuseteil (11) in dem Abschnitt gebildet ist, der mit dem hinteren Handgriff (58) in der Draufsicht nicht überlappt.

5. Motorrad nach einem der Ansprüche 1 bis 4, **dadurch gekennzeichnet, dass** der Batteriekasten (1) mit dem Gehäuseteil (11) in einem Stück integriert ist.

6. Motorrad nach einem der Ansprüche 1 bis 5, **dadurch gekennzeichnet, dass** das Motorrad außerdem einen Sitzabschnitt (54) über dem hinteren Gehäuseteil (11) aufweist und zumindest ein Teil des Batteriekastens (1) durch den Sitzabschnitt (54) in der Draufsicht abgedeckt ist.

7. Motorrad nach einem der Ansprüche 1 bis 6, **dadurch gekennzeichnet, dass** Hilfsbefestigungsbauteile (4) in dem Batteriekasten (1) gebildet sind, um die Batterie (3; 3') zu befestigen.

8. Motorrad nach einem der Ansprüche 1 bis 7, **dadurch gekennzeichnet, dass** das Motorrad ein Motorroller ist.

## Revendications

1. Motocyclette (50) comprenant une structure de logement de batterie, dans laquelle un boîtier de batterie (1) pour loger une batterie (3) est disposé dans un espace interne d'un élément de carter arrière (11) sur le côté arrière de la motocyclette, et dans laquelle un couvercle (2) de boîtier de batterie pour ouvrir et fermer le boîtier de batterie (1) est formé sur l'élément de carter arrière (11) dans une position correspondant au boîtier de batterie (1),
**caractérisée en ce que :**
une partie d'évidement (14) est formée dans la partie inférieure (13) du boîtier de batterie (1) de sorte que la partie inférieure (13) du boîtier de batterie (1) est adaptée pour supporter un premier type de batteries (3) ayant une section inférieure prédéterminée et une hauteur prédéterminée et la partie d'évidement (14) de la partie inférieure (13) est adaptée pour loger et supporter un second type de batteries (3') ayant une section inférieure réduite et une hauteur accrue.

2. Motocyclette selon la revendication 1, **caractérisée en ce que** le boîtier de batterie (1) est disposé dans un espace interne sur un côté arrière d'une partie supérieure (12) de l'élément de carter arrière (11).

3. Motocyclette selon la revendication 1 ou 2, **caractérisée en ce que** le boîtier de batterie (1) est disposé dans l'espace entre le côté interne de l'élément de carter arrière (11) à l'arrière de la motocyclette et les autres composants de la motocyclette et est combiné avec l'élément de carter arrière (11).

4. Motocyclette selon l'une des revendications 1 à 3, **caractérisée en ce que** la motocyclette comprend en outre une poignée arrière (58) et le couvercle (2) de boîtier de batterie est formé sur l'élément de carter arrière (11) dans la partie qui ne chevauche pas la poignée arrière (58) en vue en plan.

5. Motocyclette selon l'une des revendications 1 à 4, **caractérisée en ce que** le boîtier de batterie (1) est intégré avec l'élément de carter arrière (11) en une pièce.

6. Motocyclette selon l'une des revendications 1 à 5, **caractérisée en ce que** la motocyclette comprend en outre une partie de siège (54) sur l'élément de carter arrière (11), et au moins une partie du boîtier de batterie (1) est recouverte par la partie de siège (54) en vue en plan.

7. Motocyclette selon l'une des revendications 1 à 6, **caractérisée en ce que** des composants de fixation auxiliaires (4) sont formés dans le boîtier de batterie (1) pour fixer la batterie (3 ; 3').

8. Motocyclette selon l'une des revendications 1 à 7, **caractérisée en ce que** la motocyclette est un scooter.
